Europäisches Patentamt

European Patent Office

Office européen des brevets

(11) Veröffentlichungsnummer : **0 171 580**
**B1**

(12)                    EUROPÄISCHE PATENTSCHRIFT

(45) Veröffentlichungstag der Patentschrift :
09.09.87

(51) Int. Cl.⁴ : **B 60 R 22/46**

(21) Anmeldenummer : **85108284.2**

(22) Anmeldetag : **04.07.85**

(54) Sicherheitseinrichtung für Fahrzeuge zum Strammen von Sicherheitsgurten.

(30) Priorität : **10.08.84 DE 3429446**

(43) Veröffentlichungstag der Anmeldung :
**19.02.86 Patentblatt 86/08**

(45) Bekanntmachung des Hinweises auf die Patenterteilung : **09.09.87 Patentblatt 87/37**

(84) Benannte Vertragsstaaten :
**DE FR IT SE**

(56) Entgegenhaltungen :
WO-A-85 /017 07
DE-A- 1 630 477
DE-A- 2 159 265
FR-A- 2 185 981
FR-A- 2 491 340
US-A- 3 822 896

(73) Patentinhaber : **AUDI AG**
**Postfach 220**
**D-8070 Ingolstadt (DE)**

(72) Erfinder : **Der Erfinder hat auf seine Nennung verzichtet**

(74) Vertreter : **Engelhardt, Harald**
**Audi AG Postfach 2 20**
**D-8070 Ingolstadt (DE)**

## Beschreibung

Die Erfindung bezieht sich auf eine Sicherheitseinrichtung für Fahrzeuge, umfassend eine erste und eine zweite Aufwickelvorrichtung für Sicherheitsgurte, wobei die erste Aufwickelvorrichtung einen auf ihre Wickelwelle einwirkenden Antrieb zum Strammen des Sicherheitsgurtes sowie eine mit der Wickelwelle verbundene Seilrolle aufweist. Eine derartige Sicherheitseinrichtung ist aus der FR-A-2 491 340 bekannt.

Es ist bekannt, die Sicherheitsgurte eines Fahrzeuges im Kollisionsfall durch sogenannte Gurtstrammer anzuziehen, um das Verletzungsrisiko der angegurteten Insassen weiter zu reduzieren. Unabhängig von der Art der Antriebstechnik (mechanisch, pyrotechnisch, hydraulisch) des Gurtstrammers ist für jeden Sicherheitsgurt ein Antrieb erforderlich.

Der Erfindung liegt die Aufgabe zugrunde, den Bauaufwand für die Ausrüstung eines Fahrzeuges mit mehreren Gurtstrammern zu reduzieren.

Die Aufgabe wird durch die Merkmale des Anspruchs 1 gelöst.

Dadurch, daß die Rotation der durch die Strammeinrichtung angetriebenen Wickelwelle einer ersten Aufwickelvorrichtung auf die Wickelwelle einer zweiten Aufwickelvorrichtung übertragen wird, wird für die zweite Aufwickelvorrichtung ein separater Antrieb eingespart. Es ist natürlich auch möglich, neben einer zweiten Wickelwelle auch weitere Wickelwellen von zusätzlich im Fahrzeug untergebrachten Aufwickelvorrichtungen anzutreiben. Bevorzugt werden jedoch zwei hintereinander angeordnete Aufwickelvorrichtungen miteinander gekoppelt.

Die Übertragung der Rotation erfolgt durch zwei mit den zugeordneten Wickelwellen verbundenen Seilrollen und einem Seil, welches so auf den Seilrollen festgelegt ist, daß sich beim Strammen das Seil auf der antreibenden Seilrolle aufrollt und auf der getriebenen Seilrolle abspult. Wie die « treibende » Wickelwelle im Strammfall selbst bewegt wird, ist dabei ohne Belang. Es können alle bekannten Antriebstechniken (mechanisch, hydraulisch oder pyrotechnisch) Verwendung finden.

Bei einer Sicherheitseinrichtung, bei der der Antrieb der Wickelwelle der ersten Aufwickelvorrichtung durch Abziehen eines Seiles von einer an der Wickelwelle befestigten ersten Seilrolle erfolgt, wird vorteilhaft mit der Wickelwelle der ersten Aufwickelvorrichtung eine zweite Seilrolle verbunden, wobei das zur Seilrolle der zweiten Aufwickelvorrichtung führende Seil in Bezug auf den Seilverlauf der ersten Seilrolle im entgegengesetzten Drehsinn auf die zweite Seilrolle aufgelegt ist.

Um eine freie Verlegung des Seiles zu ermöglichen, ist es besonders vorteilhaft, wenn das von ersten zur zweiten Aufwickelvorrichtung geführte Seil von einer an der Karosserie des Fahrzeuges fixierten Hülle (Bowdenzug) umgeben ist.

Gemäß einer vorteilhaften Weiterbildung der Erfindung kann das an der ersten Seilrolle aufgewickelte Seil mit einem im Frontbereich des Fahrzeuges angeordneten Aggregat verbunden und so umgelenkt sein, daß bei einem Frontaufprall durch die entstehende Relativverschiebung zwischen dem Aggregat und einem weiter hinten angeordneten Karosseriebauteil das Seil von der Seilrolle abgezogen wird. Diese in der DE-A-3 3-37 232 (veröffentlicht am 27.6.85) beschriebene Vorrichtung zur Strammung eines in einer Aufwickelvorrichtung aufgenommenen Sicherheitsgurtes hat den großen Vorteil, daß ohne Sensoren eine baulich sehr einfache Strammvorrichtung mit einem hohen Kräftepotential zur Verfügung steht, welche auch geeignet ist, mehrere Gurtstrammer mit der erforderlichen Kraft zu betätigen.

Ein Ausführungsbeispiel der Erfindung ist in der Zeichnung dargestellt und wird nachfolgend näher beschrieben. Es zeigt

Figur 1 die Fahrgastzelle eines Personenkraftwagens mit einer erfindungsgemäßen Sicherheitseinrichtung, und

Figur 2 die Aufwickelvorrichtung aus Fig. 1 als Einzelteil.

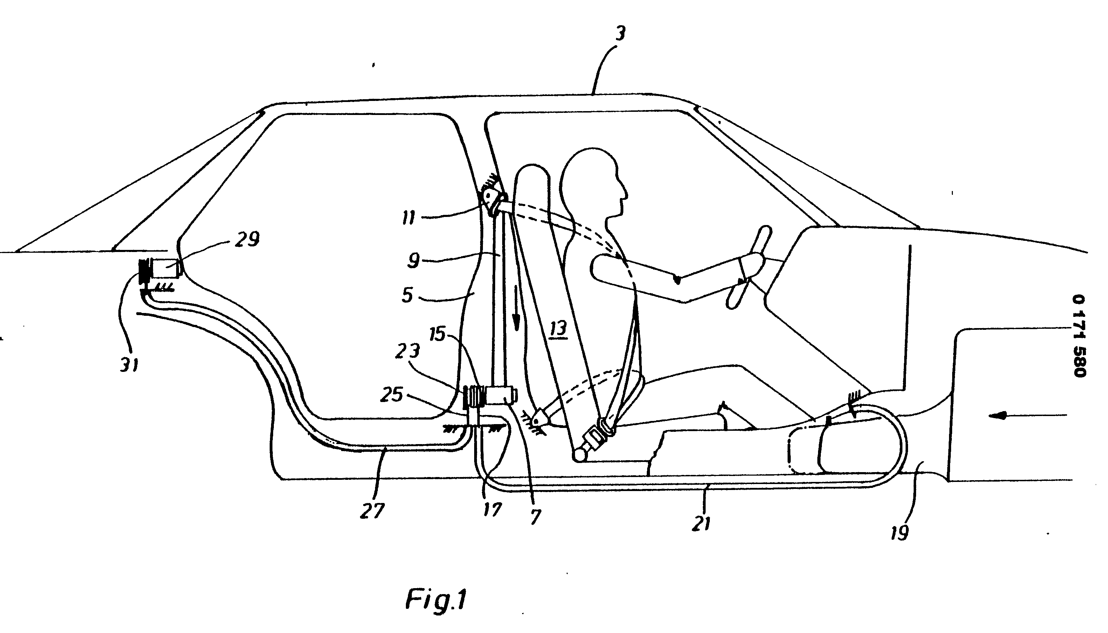

Eine in Fig. 1 dargestellte Fahrzeugkarosserie 3 umfaßt eine Mittelsäule 5, welche eine erste Aufwickelvorrichtung 7 für einen Sicherheitsgurt 9 aufnimmt. Von der Aufwickelvorrichtung 7 ist der Sicherheitsgurt 9 über einen an der Mittelsäule 9 festgelegten oberen Umlenkbeschlag 11 um eine auf einem vorderen Sitz 13 untergebrachte Person geführt.

Die Aufwickelvorrichtung 7 ist mit einer an sich bekannten und deshalb nicht näher dargestellten Einrichtung zum Strammen des Sicherheitsgurtes 9 ausgerüstet. Die Einrichtung umfaßt eine erste Seilscheibe 15, welche mit der Wickelwelle der Aufwickelvorrichtung 7 verbindbar ist. Der Antrieb der ersten Seilscheibe 15 und damit der Wickelwelle erfolgt durch ein Seil 17, welches von der Seilscheibe 15 abgezogen wird. Während die Seilscheibe 15 das eine Ende des Seiles aufnimmt, ist das andere Ende fest mit einem im Frontbereich des Fahrzeuges angeordneten Aggregat 19 verbunden. Durch eine das Seil umgebende und an seinen beiden Enden an der Karosserie festgelegten Hülle 21 wird ein Bowdenzug gebildet, welcher große Freiheiten hinsichtlich der Verlegung bietet.

Bei einem Frontaufprall wird das Aggregat 19 relativ zur Fahrzeugkarosserie 3 nach hinten bewegt (strichpunktiert dargestellt). Gleichzeitig wird das am Aggregat 19 befestigte Seil 17 gezogen, wodurch sich die Seilscheibe 15 dreht und der Sicherheitsgurt 9 gestrammt wird.

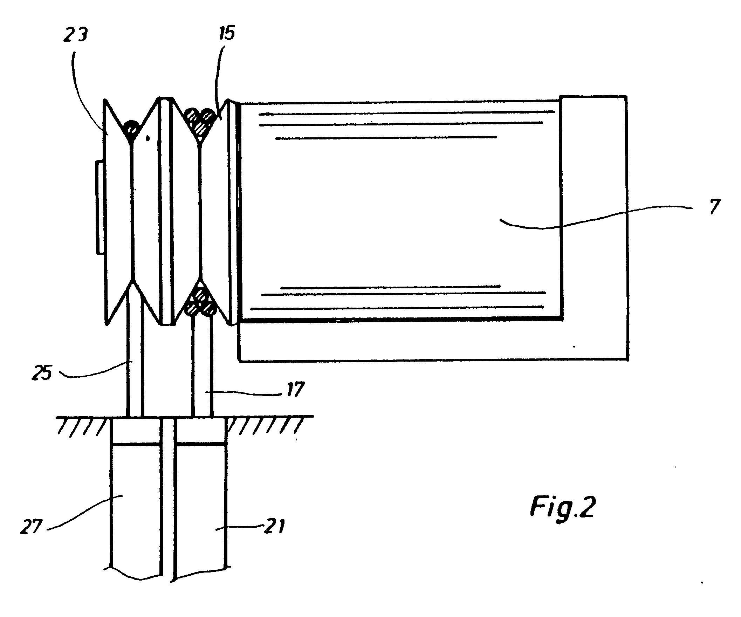

Wie die Fig. 1 allgemein und die Fig. 2 als Einzelheit deutlich zeigen, ist mit der ersten Seilscheibe 15 eine zweite Seilscheibe 23 verbunden, welche ein Seil 25 aufnimmt. Das Seil 25 führt — umgeben von einer Hülle 27 — zu einer zweiten Aufwickelvorrichtung 29. Diese Aufwickelvorrichtung dient zur Aufnahme eines nicht dargestellten Sicherheitsgurtes für eine Person auf einem hinter dem vorderen Sitz 13 angeordneten Rücksitz.

Die Fig. 2 zeigt die erste Aufwickelvorrichtung 7 mit den Seilscheiben 15 und 23 und den zugeordneten Seilen 17 und 25 in Ausgangslage. Dabei ist das Seil 17 auf der Seilrolle 15 aufgerollt. Im Kollisionsfall wird — wie eingangs beschrieben — das Seil 17 von der ersten Seilscheibe 15 abgezogen. Gleichzeitig wickelt sich das Seil 25 auf die zweite Seilscheibe 23 auf, wodurch gleichzeitig das Seil 25 von der Seilscheibe 31 der zweiten Aufwickelvorrichtung 29 abgezogen und dadurch auch der in dieser Aufwickelvorrichtung aufgenommene Sicherheitsgurt gestrammt wird.

## Patentansprüche

1. Sicherheitseinrichtung für Fahrzeuge, umfassend eine erste und eine zweite Aufwickelvorrichtung für Sicherheitsgurte, wobei die erste Aufwickelvorrichtung einen auf ihre Wickelwelle einwirkenden Antrieb zum Strammen des Sicherheitsgurtes sowie eine mit der Wickelwelle verbundene Seilrolle aufweist, dadurch gekennzeichnet, daß die Wickelwelle der zweiten Aufwickelvorrichtung (29) eine Seilrolle (31) trägt, welche über ein Seil (25) von der Seilrolle (15) der ersten Aufwickelvorrichtung (7) antreibbar ist.

2. Sicherheitseinrichtung nach Anspruch 1, wobei der Antrieb der Wickelwelle der ersten Aufwickelvorrichtung durch Abziehen eines Seiles von einer an der Wickelwelle befestigten ersten Seilrolle erfolgt, dadurch gekennzeichnet, daß mit der Wickelwelle der ersten Aufwickelvorrichtung (7) eine zweite Seilrolle (23) verbunden ist und daß das zur Seilrolle (31) der zweiten Aufwickelvorrichtung (29) führende Seil (25) in Bezug auf den Seilverlauf auf der ersten Seilrolle (15) im entgegengesetzten Drehsinn auf die zweite Seilrolle (23) aufgelegt ist.

3. Sicherheitseinrichtung nach Anspruch 1 oder 2, dadurch gekennzeichnet, daß das von der ersten (7) zur zweiten Aufwickelvorrichtung (29) geführte Seil (25) von einer an der Karosserie (3) des Fahrzeugs fixierten Hülle (27) (Bowdenzug) umgeben ist.

4. Sicherheitseinrichtung nach Anspruch 2 oder 3, dadurch gekennzeichnet, das an der ersten Seilrolle (15) aufgewickelte Seil (17) mit einem im Frontbereich des Fahrzeuges angeordnetem Aggregat (19) verbunden und so umgelenkt ist, daß bei einem Frontaufprall durch die entstehende Relativverschiebung zwischen dem Aggregat (19) und einem weiter hinten angeordneten Karosseriebauteil das Seil (17) von der Seilrolle (15) abgezogen wird.

## Claims

1. Safety device for vehicles, consisting of a first retractor and a second retractor for safety belts, in which the retractor shaft of the first retractor is provided with a drive mechanism for tensioning the safety belt, and a cable pulley connected to the retractor shaft, characterised in that the retractor shaft of the second retractor (29) carries a cable pulley (31), which can be driven from the cable pulley (15) of the first retractor (7) by means of a cable (25).

2. Safety device in accordance with claim 1, in which the retractor shaft of the first retractor is driven by pulling a cable from a first cable pulley secured to the retractor shaft, characterised in that a second cable pulley (23) is connected to the retractor shaft of the first retractor (7) and that the cable (25) leading to the cable pulley (31) of the second retractor (29) is positioned on the second cable pulley (23) in the reverse direction to that of the cable on the first cable pulley (15).

3. Safety device in accordance with claim 1 or 2, characterised in that the cable (25) running from the first retractor (7) to the second retractor (29) is surrounded by a sleeve (27) (Bowden cable) fixed to the body (3) of the vehicle.

4. Safety device in accordance with claim 2 or 3, characterised in that the cable (17) located on the first cable pulley (15) is connected with an engine/gearbox unit (19) at the front of the vehicle, and is routed in such a way that in a frontal collision the cable (17) is pulled off the cable pulley (15) by reason of the relative movement occuring between the engine/gearbox unit (19) and a part of the body located further towards the rear.

## Revendications

1. Dispositif de sécurité pour véhicules automobiles, comprenant un premier et un second dispositifs enrouleurs pour des ceintures de sécurité, le premier dispositif enrouleur présentant un mécanisme de commande agissant sur son arbre d'enroulement pour le raidissement de la ceinture de sécurité, ainsi qu'une poulie solidaire de l'arbre d'enroulement, caractérisé en ce que l'arbre d'enroulement du second dispositif enrouleur (29) porte une poulie (31) qui peut être commandée par un câble (25) à partir de la poulie (15) du premier dispositif enrouleur (7).

2. Dispositif de sécurité selon la revendication 1, dans lequel la commande de l'arbre d'enroulement du premier dispositif enrouleur s'effectue par déroulement d'un câble à partir d'une première poulie fixée à l'arbre d'enroulement, caractérisé en ce qu'une seconde poulie (23) est solidaire de l'arbre d'enroulement du premier dispositif enrouleur (7) et en ce que le câble (25) qui aboutit à la poulie (31) du second dispositif enrouleur (29) est posé sur la seconde poulie (23) dans le sens de rotation opposé par rapport au passage du câble sur la première poulie (15).

3. Dispositif de sécurité selon la revendication 1 ou 2, caractérisé en ce que le câble (25) allant du premier (7) au second (29) dispositifs enrouleurs est enfermé dans une gaine (27) fixée à la carrosserie (3) de la voiture (commande Bowden).

4. Dispositif de sécurité selon la revendication 2 ou 3, caractérisé en ce que le câble (17) enroulé sur la première poulie (15) est raccordé à une masse (19) disposée dans la partie avant de la voiture et est renvoyé de telle manière qu'en cas de choc par l'avant, le câble (17) soit déroulé de la poulie (15) par le déplacement relatif qui se produit entre cette masse (19) et un élément de la carrosserie disposé plus en arrière.

Fig.1

Fig.2